# EUROPÄISCHE PATENTSCHRIFT

(11) **EP 0 357 819 B1**
(45) Veröffentlichungstag und Bekanntmachung des Hinweises auf die Patenterteilung: **18.01.1995**
(21) Anmeldenummer: 88114631.0
(22) Anmeldetag: 07.09.1988
(51) Int. Cl.: H04M 3/56

(54) **Schaltungsanordnung zur Herstellung von Konferenzverbindungen in einer digitalen Zeitmultiplex-Fernmeldevermittlungsstelle**
Circuit arrangement for establishing conference connections in a digital time-multiplexed telephone exchange
Circuit pour l'établissement de conférences téléphoniques dans un central téléphonique numérique à multiplexage temporel

(43) Veröffentlichungstag der Anmeldung: 14.03.1990
(73) Patentinhaber: SIEMENS AKTIENGESELLSCHAFT, 80333 München (DE)
(72) Erfinder: Nagler, Werner, D-8021 Schäftlarn (DE); Krumenacker, Rudolf, D-8000 München 21 (DE); Kaderka, Rostislav, D-8034 Germering (DE)

(56) Entgegenhaltungen:
- EP-A- 0 163 307
- GB-A- 2 059 123
- GB-A- 2 063 622
- US-A- 4 575 845
- ELECTRONIC DESIGN, Band 36, Nr. 9, 14. April 1988, Seiten 137-140, Hasbrouck Heights, NJ, US; C. NGUYEN et al.: "Manage PABX conference calls with a single chip"

## Beschreibung

### Schaltungsanordnung zur Herstellung von Konferenzverbindungen in einer digititalen Zeitmultiplex-Fernmeldevermittlungsstelle

Die Erfindung betrifft eine Schaltungsanordnung zur Herstellung von Konferenzverbindungen in einer digitalen Zeitmultiplex-Fernmeldevermittlungsstelle gemäß dem Oberbegriff des Patentanspruchs 1.

Bei bekannten Schaltungsanordnungen dieser Art (EP-A-0 163 307) werden die in den den Konferenzteilnehmern zugeordneten Zeitkanälen angelieferten Konferenzanteile zyklisch in den Sprachspeicher der Fernmeldevermittlungsstelle eingeschrieben. Durch entsprechende Ansteuerung des Sprachspeichers erfolgt zunächst eine Zeitkanalumsetzung auf Konferenzzeitfächer, in denen die Signalanteile an einen Konferenzsatz gelangen. Der in diesem Konferenzsatz enthaltene Addierer ist so geartet, daß er jeweils zwei Summanden verarbeiten kann. Das bedeutet, daß also zunächst aus zwei Konferenzeinzelanteilen nacheinander verschiedene Zwischensummen gebildet werden. Diese Zwischensummen gelangen in weiteren Konferenzzeitfächern wieder an den Sprachspeicher, erfahren eine weitere Zeitkanalumsetzung in andere Konferenzzeitfächer, in denen sie wieder dem Konferenzsatz zugesendet werden. Dort wird ihnen ein weiterer Einzelkonferenzanteil eines Konferenzteilnehmers zuaddiert. In bisher noch nicht benutzten Konferenzzeitfächern gelangen diese Summensignale zum zweiten Mal an den Sprachspeicher. Sofern mehr als vier Konferenzteilnehmer an der Konferenz beteiligt sind, wiederholt sich die beschriebene Prozedur ein- oder mehrmals. Andernfalls erfolgt eine Zeitkanalumsetzung der einzelnen Summenwerte, bei denen es sich dann um Endsummen handelt, in die Zeitlage desjenigen Zeitkanals, der dem Konferenzteilnehmer zugeordnet ist, dessen Konferenzanteil die Summe nicht enthält.

Aus ELECTRONIC DESIGN, Band 36, Nr.9, 14.04.1988, S. 137 - 140, Hasbrouck Heights, NJ, US; C.Nguyen et al.: "Manage PABX conference calls with a single chip ist es bekannt, zur Bildung der Summensignale einen Mikroprozessor einzusetzen, der außerdem noch die Aufgabe hat, eine bestimmte Dämpfung sowie die Hörtoneinblendung zu bewirken. Dieser Mikroprozessor liegt in einer Rückführungsschleife, die an einen gesonderten Ausgang und einen gesonderten Eingang des Sprachspeichers einer Vermittlungsstelle angeschlossen ist.

Die Aufgabe der Erfindung besteht nun darin, eine Konferenzschaltung anzugeben, bei der die Abwicklung der Konferenzsummenbildung vereinfacht ist und bei der andererseits die Konferenzeinheit derart in das Vermittlungssystem und die diesem zugrundeliegende Multiplexorganisation eingebunden ist, daß sich bei möglichst geringfügiger Änderung der Konzeption einer Vermittlungsstelle ohne das Leistungsmerkmal Konferenzbildung eine hardwaremäßig einfache Lösung ergibt.

Die der Erfindung zugrundeliegende Aufgabe wird mit einer Schaltungsanordnung der eingangs erwähnten Art aufgrund der im Kennzeichen des Patentanspruchs 1 angegebenen Merkmale gelöst.

Bei der erfindungsgemäßen Lösung ist die Bildung von Zwischensummen im Zuge der Herstellung von Konferenzverbindungen vermieden und für die Durchführung von Konferenzverbindungen sind im wesentlichen lediglich eine Erweiterung des Vermittlungsspeichers und seines Haltespeichers erforderlich.

Darüber hinaus kann gemäß einer weiteren Ausgestaltung der Erfindung eine Einrichtung zur Dämpfung und zur Codekonvertierung sowohl im Zusammenhang mit der Konferenzsummenbildung als auch im Zusammenhang mit den in abgehender Übertragungsrichtung zu übertragenden Signalen ausgenutzt werden, womit ebenfalls eine Aufwandsersparnis erzielt ist.

Die erfindungsgemäße Lösung bietet die Möglichkeit, gemäß noch einer anderen Ausgestaltung mit geringem Mehraufwand, nämlich lediglich durch entsprechende Steuerung der Einträge in den Haltespeicher Konferenzverbindungen derart abzuwickeln, daß einzelne Konferenzteilnehmer lediglich als "hörende" Konferenzteilnehmer bzw. andere lediglich als "sprechende" Konferenzteilnehmer an einer Konferenzverbindung beteiligt sind. Gemäß noch einer anderen Ausgestaltung der Erfindung ist es ferner möglich, ebenfalls lediglich durch entsprechende Haltespeichereinträge eine Rundspruchverbindung herzustellen, bei der die von einem bestimmten Teilnehmer ausgesendeten Informationen gleichzeitig an mehrere andere Teilnehmer gelangen.

Weitere Vorteile der Erfindung ergeben sich aus der nachstehenden Erläuterung eines Ausführungsbeispiels der Erfindung, bei der auf eine Zeichnung Bezug genommen wird.

In der Zeichnung zeigen:

Figur 1 die beispielhafte Struktur einer digitalen Zeitmultiplex-Vermittlungsstelle.

Figur 2 denjenigen Teil einer solchen Zeitmultiplexvermittlungsstelle, den die Erfindung betrifft.

Figuren 3 und 4 Durchschaltekonfigurationen des zur Konferenzbildung mitausgenutzten Sprachspeichers einer Vermittlungsstelle im Falle einer normalen Zweierverbindung und im Falle einer Konferenzverbindung.

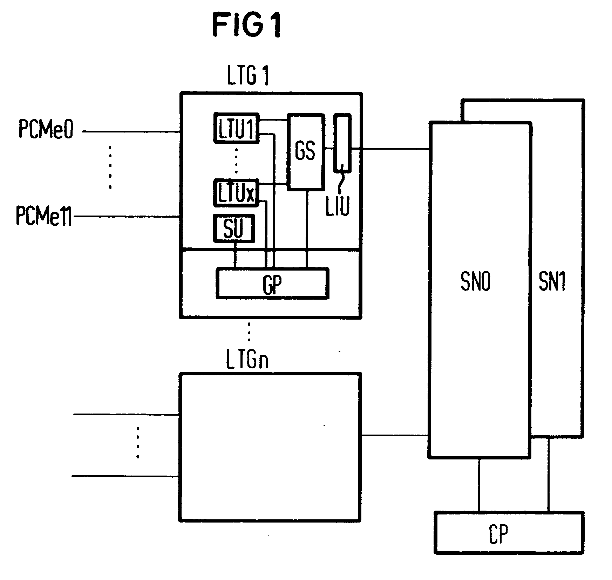

Die in Figur 1 dargestellten digitalen Zeitmultiplex-Vermittlungsstelle besteht aus einer Reihe von Anschlußgruppen LTG1 bis LTGn, aus einem gedoppelten Koppelnetz SN0/SN1, sowie aus einem Koordinationsprozessor CP.

Die Anschlußgruppen LTG1 bis LTGn bilden die Schnittstelle zwischen der analogen oder digitalen Umgebung der Vermittlungsstelle und dem Koppelnetz. An sie sind demnach mit Teilnehmern verbindende Teilnehmerleitungen und/oder mit anderen Vermittlungsstellen verbindende Verbindungsleitungen PCMe0 bis PCMe11 angeschlossen.

Die Anschlußgruppen enthalten als wesentliche Bestandteile, wie bei der Anschlußgruppe LTG1 im einzelnen gezeigt, Anschlußeinheiten LTU1 bis LTUx, die ihrerseits die hier nicht dargestellten Teilnehmersätze oder Leitungssätze enthalten, ferner einen Gruppenkoppler GS, eine Schnittstelleneinheit LIU, die die Schnittstelle zwischen der Anschlußgruppe und dem Koppelfeld darstellt, eine Signaleinheit SU, sowie einen Gruppenprozessor GP, der die genannten Einheiten steuert und darüber hinaus über die Teilnehmer- oder Verbindungsleitungen empfangene Wählinformationen verarbeitet und im Zusammenhang mit dem Aufbau und der Auslösung von Verbindungen mit dem Koordinationsprozessor CP in Steuerzeichenaustausch steht. Außerdem führt der Gruppenprozessor GP Routineprüfungen durch und übernimmt Überwachungsaufgaben.

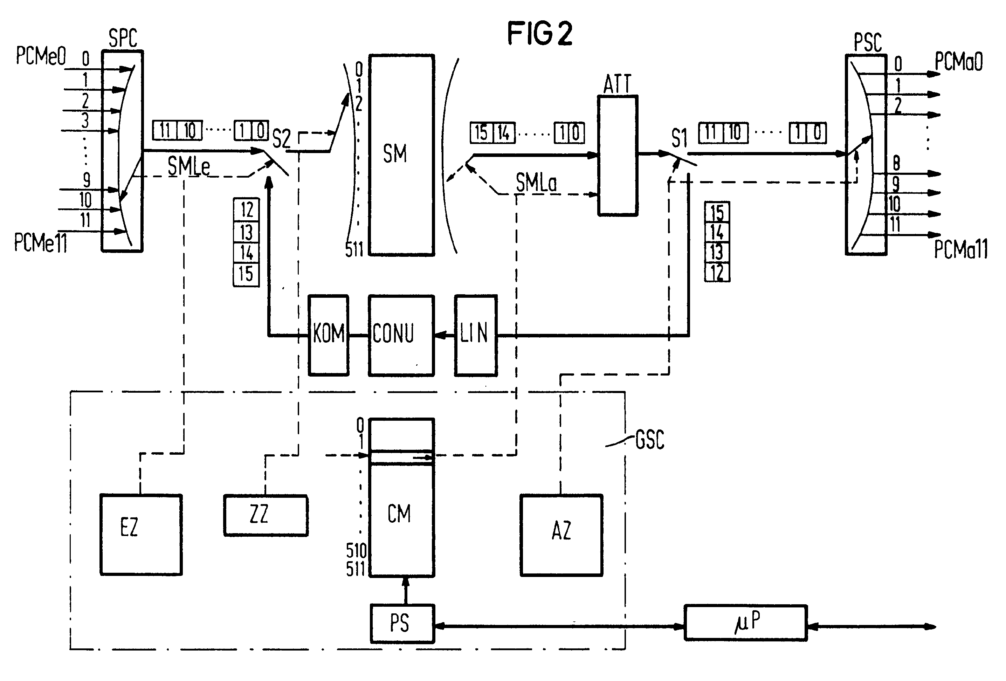

In Figur 2 ist eine hier näher interessierender Teil der Anschlußgruppe LTG der Anordnung gemäß Figur 1 zusammen mit der erfindungsgemäßen Schaltungsanordnung zur Herstellung von Konferenzverbindungen mehr ins Einzelne gehend dargestellt.

Es ist der Anschluß von 12 PCM-Leitungen vorausgesetzt, auf denen jeweils 32 Zeitkanäle gebildet sind. Die Zweige für ankommende Übertragungsrichtung PCMeo bis PCMe11 dieser PCM-Leitungen sind an einen Serien-Parallel-Wandler SPC angeschlossen, der außerdem als Multiplexer wirkt, durch den die einzelnen Bits der auf den PCM-Leitungen ankommenden PCM-Worte nach einer Serien-Parallel-Wandlung unter der Voraussetzung von jeweils 8 Bit pro PCM-Wort auf die 8 Adern des Empfangszweigs SMLe einer mehradrigen Supermultiplexleitung verteilt werden und die durch Multiplexbildung auf dieser Multiplexleitung zeitlich derart verschachtelt werden, daß zunächst nacheinander die auf den PCM-Leitungen PCM e0 bis PCM e11 im Zeitkanal 0 übertragenen PCM-Worte nacheinander auftreten, dann die nacheinander im Zeitkanal 1 übertragenen usw. und schließlich die im Zeitkanal 32 übertragenen PCM-Worte.

Die Ablaufsteuerung des erwähnten Multiplexers arbeitet jedoch mit einem derart hohen Auslesetakt, daß außer den 12 x 32 = 384 Zeitfächern für die PCM-Worte der 12 PCM-Leitungen, die hier als Übertragungszeitfächer bezeichnet werden, zusätzliche Zeitfächer gebildet werden, hier als Konferenzzeitfächer bezeichnet. Entsprechend einer angenommenen Maximalzahl von 4 Konferenzteilnehmern pro Konferenz und 32 gleichzeitig möglichen Konferenzen sind dies 4 x 32 zusätzliche Zeitfächer, die 32 Gruppen von jeweils 4 nacheinander auftretenden Zeitfächern bilden.

Der erwähnte Empfangszweig SMLe der Supermultiplexleitung führt zu einem Sprachspeicher SM, der zusammen mit der entsprechenden Ansteuerung den Gruppenkoppler GS gemäß Figur 1 bildet.

Der Sprachspeicher SM weist entsprechend der auf der Supermultiplexleitung gebildeten 384 Übertragungszeitlagen 384 Speicherzellen für jeweils 1 PCM-Wortauf. Zusätzlich, entsprechend den erwähnten zusätzlichen Konferenzzeitlagen, weist er 128 weitere Speicherzellen für jeweils 1 PCM-Wort auf, die 32 jeweils einer Konferenz zugeordnete Gruppen mit jeweils 4 Speicherzellen für 4 an einer Konferenz beteiligbare Konferenzteilnehmer bilden.

Das Einschreiben in den Sprachspeicher SM von dem ankommenden zweig SMLe der Supermultiplexleitung aus erfolgt zyklisch, das Auslesen auf den abgehenden Zweig SMLa der Multiplexleitung dagegen wahlfrei. Auf diesem abgehenden Zweig SMLa der Supermultiplexleitung herrschen entsprechende Verhältnisse wie auf dem ankommenden Zweig SMLe.

Die Figur 2 zeigt ferner eine Konferenzeinheit CONU, die in einer Rückführungsschleife liegt, über die bei entsprechender Schaltstellung von Umschaltern S1 und S2 der Ausgang des Sprachspeichers mit dessen Eingang verbunden ist. Eingangs der Konferenzeinheit CONU ist eine Einrichtung LIN zur Umwandlung von nichtlinearer Codedarstellung in lineare Codedarstellung angeordnet, ausgangsseitig der Konferenzeinheit eine Einrichtung KOM, die der entgegengesetzten Umwandlung von linearer Codedarstellung in nichtlinearer Codedarstellung dient.

Es ist ferner eine Einrichtung ATT vorhanden, die einerseits eine gewisse Dämpfung der sie durchlaufenden Digitalsignale bewirkt, andererseits gegebenenfalls eine Konvertierung der Codedarstellung dieser Digitalsignale von einer dem µ-Gesetz gehorchenden Codierung in eine dem A-Gesetz gehorchenden Codierund umgekehrt.

Diese Einrichtung ATT ist an einer solchen Stelle an den Ausgang des Sprachspeichers SM angeschlossen, das sowohl diejenigen aus dem Sprachspeicher ausgelesenen Digitalsignale, die über die Rückführungsschleife an die Konferenzeinheit CONU gelangen, als auch diejenigen Signale, die auf der Supermultiplexleitung SMLa für abgehende Übertragungsrichtung weiter an einen Parallel-Serien-Wandler PSC übertragen werden. Dieser erfüllt außerdem eine Demultiplexerfunktion, so daß die Digitalsignale nach einer Parallel-Serienwandlung auf die abgehenden Zweige PCMa0 bis PCMa11 der angeschlossenen PCM-Leitungen verteilt werden.

Die dargestellte Anordnung steht unter dem Steuereinfluß einer Steuerung GSC, deren zentraler Teil ein Haltespeicher CM ist, der die Ansteueradressen für das wahlfreie Auslesen des Sprachspeichers SM liefert. Dieser Sprachspeicher enthält demnach eine gleiche Anzahl von Speicherzellen wie der Sprachspeicher SM, von denen diejenigen, die die Ansteueradressen für mit der Konferenz zusammenhängenden Speicherzellen im Sprachspeicher aufnehmen, in entsprechender Zuordnung gruppiert sind, nämlich 32 Vierergruppen entsprechend 32 gleichzeitig möglichen Konferenzen mit jeweils vier Speicherzellen entsprechend vier Konferenzteilnehmern pro Konferenz enthalten. Weitere Bestandteile der Steuerung GSC sind eine Prozessorschnittstelle PS zu einem Mikroprozessor µP, ein Zähler ZZ, der Ansteueradressen für die 512 Speicherzellen des Sprachspeichers SM beim zyklischen Einschreiben liefert, ferner ein Eingabezeitlagenzähler EZ, der die Übertragungszeitlagen auf der Supermultiplexleitung für ankommende Übertragungsrichtung SMLe zählt und nach deren Verstreichen jeweils den Umschalter S2 betätigt. Schließlich ist ein Ausgabezeitlagenzähler AZ vorgesehen, der in entsprechender Weise die Übertragungszeitspannen auf der Supermultiplexleitung für abgehende Übertragungsrichtung SMLa zählt und ein Steuersignal für den Umschalter S1 liefert.

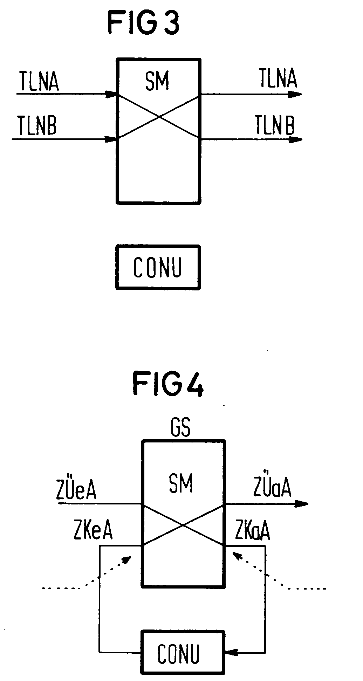

Nachstehend wird zunächst auf die Vorgänge bei der Abwicklung einer normalen Zweierverbindung eingegangen, wozu auch auf die Figur 3 Bezug genommen wird. Es sei angenommen, daß eine Verbindung zwischen einem Teilnehmer A und einem Teilnehmer B bestehen soll, die in ihnen zugeordneten Zeitfächern auf den ankommenden Zweigen PCMe der Zeitmultiplexleitungen bzw. in den entsprechenden Übertragungszeitfächern auf der Supermultiplexleitung für ankommende Übertragungsrichtung SMLe PCM-Worte an den Sprachspeicher SM liefern, in dem diese im Zuge des zyklischen Einschreibens in diesen Zeitfächern zugeordneten Speicherzellen abgelegt werden. Durch wahlfreies Auslesen gelangen die vom Teilnehmer A stammenden PCM-Worte in das auf der Supermultiplexleitung für abgehende Übertragungsrichtung SMLa dem Teilnehmer B zugeordneten Zeitfächer, wogegen umgekehrt die vom Teilnehmer B stammenden PCM-Worte in die dem Teilnehmer A auf dieser Multiplexleitung SMLa zugeordneten Übertragungszeitfächer gelangen.

Die Konferenzeinheit hat in diesem Zusammenhang keine Funktion.

Nunmehr wird auf die Vorgänge bei der Abwicklung einer Konferenz mit Hilfe der erfindungsgemäßen Schaltungsanordnung näher eingegangen. Es wird dabei angenommen, daß eine Konferenz zwischen vier Konferenzteilnehmern A, B, C und D bestehen soll, die Einzelsignale in Form entsprechender PCM-Worte in ihnen auf den ankommenden Zweigen PCMe der Zeitmultiplexleitungen bzw. auf den entsprechenden Übertragungszeitfächern auf der Supermultiplexleitung SMLe für ankommende Übertragungsrichtung an den Sprachspeicher SM liefern, in dem diese, wie oben angegeben, durch zyklisches Einschreiben in den genannten Übertragungszeitfächern zugeordneten Speicherzellen abgelegt werden. Beim wahlfreien Auslesen der betreffenden Speicherzellen erfolgt nunmehr aber im Gegensatz zu den Verhältnissen bei der oben erläuterten Zweierverbindung, eine Umsetzung in auf der Supermultplexleitung SMLa gebildete unmittelbar aufeinanderfolgende Konferenzzeitfächer einer der betreffenden Konferenz zugeordneten Gruppe von Konferenzzeitfächern. Über dem Schalter S1, der, gesteuert durch den Zähler AZ während dieser Zeitspannen die dargestellte Schaltstellung einnimmt und über die Einrichtung LIN, die eine Linearisierung vornimmt, gelangen sie an die Konferenzeinheit CONU. Dort werden vier Summensignale gebildet, die jeweils das Einzelsignal desjenigen Konferenzteilnehmers, für den sie bestimmt sind, nicht enthalten. Diese Summensignale gelangen nach einer Codewandlung von linearer Codierung in nichtlinearer Codierung durch die Einrichtung KOM in entsprechenden aufeinanderfolgenden Konferenzzeitlagen über den den Schalter S2, an den Eingang des Sprachspeichers SM, wo sie im Zuge des zyklischen Einschreibens in den erwähnten Konferenzzeitlagen zugeordneten Speicherzellen abgelegt werden. Durch wahlfreie Ansteuerung dieser Speicherzellen erfolgt dann eine Umsetzung auf die den erwähnten Konferenzteilnehmern A, B, C und D in auf der Supermultiplexleitung für abgehende Übertragungsrichtung SMLa für abgehende Übertragungsrichtung gebildete Übertragungszeitlagen, von wo aus sie über die Einrichtung ATT und dem nunmehr umgeschalteten Schalter S1 an den Parallel-Serienwandler PSC und von da aus an die betreffende oder die betreffenden abgehenden Zweige PCMa0 bis PCMa11 der Zeitmultiplexleitungen gelangen.

Die Figur 4 veranschaulicht noch einmal kurz die Zeitlagenumsetzungen im Zusammenhang mit einem einzigen der Konferenzteilnehmer (Konferenzteilnehmer A). Das Einzelsignal des Konferenzteilnehmers wird auf der diesem Teilnehmer zugeordneten Übertragungszeitlage ZÜeA dem Sprachspeicher SM zugeführt. Es wird dann auf die diesem Teilnehmer zugeordnete Konferenzzeitlage ZKaA ausgelesen und der Konferenzeinheit CONU zugeführt. Das dort aus den von den übrigen Konferenzteilnehmern gelieferten Einzelsignalen gebildete für den Teilnehmer A bestimmte Summensignal gelangt von der Konferenzeinheit CONU in einer Konferenzzeitlage ZKeA erneut an den Sprachspeicher SM, wird dort zwischengespeichert und dann in der dem Teilnehmer A zugeordneten Übertragungszeitlage ZÜaA ausgelesen.

Mit der erfindungsgemäßen Schaltungsanordnung ist es ohne besonderen Aufwand möglich, einzelne Konferenzteilnehmer nur als "hörende" Teilnehmer an der Konferenz zu beteiligen, wozu lediglich das wahlfreie Auslesen von durch diese Konferenzteilnehmer gelieferten Einzelsignalen aus dem Sprachspeicher SM in Konferenzzeitfächer unterbunden werden muß.

Entsprechendes gilt für die Möglichkeit, einzelne Konferenzteilnehmer lediglich als "sprechende" Konferenzteilnehmer an der Konferenz zu beteiligen, wozu für diese Konferenzteilnehmer das Auslesen der im Sprachspeicher SM enthaltenen teilnehmerindividuellen Summensignale unterbunden wird.

Wenn die vorerwähnte Beschränkung beim Auslesen von Einzelsignalen aus dem Konferenzspeicher in auf der Multiplexleitung für abgehende Übertragungsrichtung gebildeten Konferenzzeitlagen auf alle bis auf einen Konferenzteilnehmer ausgedehnt wird, liegt eine sogenannte Rundspruchverbindung vor, bei der die von diesem einen Konferenzteilnehmer stammenden Signale an alle übrigen der an der Verbindung beteiligten Teilnehmer gelangen.

## Patentansprüche

1. Schaltungsanordnung zur Herstellung von Konferenzverbindungen in einer digitalen Zeitmultiplex-Fernmeldevermittlungsstelle, mit
a)einer Konferenzeinheit (CONU), die in einer den Ausgang des zyklisch einschreibbaren und wahlfrei auslesbaren Sprachspeichers (SM) der Koppelanordnung mit dessen Eingang verbindenden Rückführungsschleife liegt, wobei
b)auf den eingangsseitig und ausgangsseitig an den Sprachspeicher angeschlossenen Multiplexleitungen (SMLe, SMLa) für Parallelübertragungen von PCM-Worten über die Anzahl der Zeitfächer hinaus, in denen Informationsübertragungen von und zu der Vermittlungsstelle stattfinden (Übertragungszeitfächer), zusätzliche Zeitfächer (Konferenzzeitfächer) gebildet sind und
c)der Sprachspeicher (SM) und sein zugehöriger Haltespeicher (CM) zusätzlich zu den im Zuge einer Vermittlung von Zweierverbindung erforderlichen Sprachspeicher- bzw. Haltespeicherzellen den genannten Konferenzzeitlagen zugeordnete Speicherzellen aufweisen, und
d)die Konferenzeinheit (CONU) durch wahlfreies Auslesen aus dem Sprachspeicher (SM) in Konferenzzeitfächer umgesetzte Einzelsignale der Konferenzteilnehmer empfängt und aus diesen gebildete konferenzteilnehmerindividuelle Summensignale, die jeweils den Eigenanteil des Teilnehmers nicht enthalten, in entsprechende Konferenzzeitfächer auf die eingangsseitige Multiplexleitung (SMLe) liefert, von wo aus sie beim zyklischen Einschreiben in die zugeordneten zusätzlichen Sprachspeicherzellen gelangen und
e)nach wahlfreiem Auslesen diese Summensignale in den den Konferenzteilnehmern zugeordneten Übertragungszeitfächern auf der ausgangsseitigen Multiplexleitung (SMLa) weiterübertragen werden,
**dadurch gekennzeichnet**,
daß die auf den an den Sprachspeicher (SM) angeschlossenen Multiplexleitungen (SMLe, SMLa) gebildeten Konferenzzeitfächer eine der Anzahl von gleichzeitig möglichen Konferenzen gleiche Anzahl von Gruppen bilden, die jeweils soviele Zeitfächer umfassen, wie maximal Konferenzteilnehmer pro Konferenz möglich sind, und daß die Konferenzeinheit (CONU) die genannten konferenzteilnehmerindividuellen Summensignale ohne vorherige Weitergabe von Zwischensummen an den Sprachspeicher (SM) bildet.

2. Schaltungsanordnung nach Anspruch 1,
**dadurch gekennzeichnet**,
daß eine Einrichtung (ATT) zur Dämpfung und gegebenenfalls der Umwandlung der Codierung gemäß dem µ-Gesetz in eine Codierung gemäß dem A-Gesetz oder umgekehrt derart ausgangsseitig an den Sprachspeicher angeschlossen ist, daß aus dem Sprachspeicher ausgelesene Informationen sie sowohl dann durchlaufen, wenn sie an die Konferenzeinheit (CONU) gelangen, als auch dann, wenn sie über die an den Ausgang des Sprachspeichers angeschlossene Multiplexleitung (SMLa) für abgehende Übertragungsrichtung weiter übertragen werden.

3. Schaltungsanordnung nach Anspruch 1 oder 2,
**dadurch gekennzeichnet**,
daß das wahlfreie Auslesen von durch Konferenzteilnehmer gelieferten Einzelsignalen aus dem Sprachspeicher (SM) in Konferenzzeitfächer für einzelne Konferenzteilnehmer unterbunden ist, womit diese nur hörend an der Konferenz beteiligt sind.

4. Schaltungsanordnung nach Anspruch 1 oder 2,
**dadurch gekennzeichnet**,
daß das wahlfreie Auslesen von teilnehmerindividuellen Summensignalen aus dem Sprachspeicher (SM) in konferenzteilnehmerindividuelle Übertragungszeitfächer für einzelne Konferenzteilnehmner unterbunden ist, womit diese nur sprechend an der Konferenz beteiligt sind.

5. Schaltungsanordnung nach Anspruch 3,
**dadurch gekennzeichnet**,
daß in die Beschränkung beim Auslesen alle bis auf einen Konferenzteilnehmer einbezogen sind, womit der Konferenzbeitrag dieses einen Konferenzteilnehmers als Rundspruch an alle übrigen Konferenzteilnehmer gelangt.

## Claims

1. Circuit arrangement for establishing conference connections in a digital time-division multiplex telecommunication exchange, having
a) a conference unit (CONU) situated in a feedback loop that connects the output of the voice memory (SM), which can be cyclically written and randomly read, of the switching network to the input thereof, in which
b) additional time cells (conference time cells) are formed on the multiplex lines (SMLe, SMLa) connected to the voice memory on the input side and output side for the parallel transmission of PCM words beyond the number of time cells (transmission time cells) in which information is transmitted from and to the exchange, and
c) the voice memory (SM) and its associated hold latch (CM) have memory cells assigned to said conference time slots in addition to the voice memory cells and hold latch cells required in the course of switching a two-party connection, and
d) the conference unit (CONU) receives individual signals of the conferees converted into conference time cells by random reading out from the voice memory (SM) and supplies conferee-specific sum signals formed therefrom, which do not include the subscriber's own part in each case, into corresponding conference time cells on the input-side multiplex line (SMLe), from where they proceed during cyclical writing into the assigned additional voice memory cells, and
e) after random reading out, said sum signals are transmitted further in the transmission time cells assigned to the conferees on the output-side multiplex line (SMLa), characterized in that the conference time cells formed on the multiplex lines (SMLe, SMLa) connected to the voice memory (SM) form a number of groups equal to the number of simultaneously possible conferences comprising in each case as many time cells as the maximum possible number of conferees per conference, and in that the conference unit (CONU) forms said conferee-specific sum signals without prior forwarding of intermediate sums to the voice memory (SM).

2. Circuit arrangement according to Claim 1, characterized in that a device (ATT) for attenuation and if necessary conversion of encoding according to the µ-law into encoding according to the A-law or vice versa is connected to the voice memory on the output side in such a way that information read out of the voice memory passes through it both when it proceeds to the conference unit (CONU) and when it is transmitted further via the multiplex line (SMLa) connected to the output of the voice memory for the outgoing transmission direction.

3. Circuit arrangement according to Claim 1 or 2, characterized in that the random reading of individual signals supplied from conferees out of the voice memory (SM) into conference time cells is blocked for individual conferees, with the result that the latter have only hearing access to the conference.

4. Circuit arrangement according to Claim 1 or 2, characterized in that the random reading of conferee-specific sum signals out of the voice memory (SM) into conferee-specific transmission time cells is blocked for individual conferees, with the result that the latter have only speaking access to the conference.

5. Circuit arrangement according to Claim 3, characterized in that all conferees except one are included in the restriction during reading out, with the result that the contribution to the conference of said one conferee proceeds as a broadcast to all other conferees.

## Revendications

1. Montage pour établir des communications en conférence dans un central numérique de télécommunication à multiplexage temporel, comportant
a) une unité (CONU) de conférence, qui se trouve dans une boucle de renvoi reliant la sortie de la mémoire (SM) vocale susceptible d'être enregistrée cycliquement et susceptible d'être lue au choix, du réseau de connexion, à son entrée de ce dernier, et
b) des créneaux temporels supplémentaires (créneaux temporels de conférence) étant formés sur les lignes (SMLe, SMLa) de multiplexage connectées côté entrée et côté sortie à la mémoire vocale et destinées à transmettre en parallèle des mots MIC sur le nombre de créneaux temporels, dans lesquels des transmissions d'informations provenant et à destination du central ont lieu (créneaux temporels de transmission),
c) la mémoire (SM) vocale et sa mémoire (CM) de maintien associée comportant, en plus des cellules de mémoire vocale et de mémoire de maintien nécessaires au cours d'une commutation de liaisons à deux abonnés, des cellules de mémoire associées aux dits créneaux temporels de conférence,
d) l'unité (CONU) de conférence recevant par lecture au choix de la mémoire (SM) vocale, des signaux individuels, convertis en créneaux temporels de conférence, des participants à la conférence et fournissant des signaux-somme, qui sont formés à partir de ces signaux individuels propres à chaque participant à la conférence et qui ne contiennent pas la partie propre à chaque participant, dans des créneaux temporels de conférence correspondants, sur la ligne (SMLe) de multiplexage côté entrée, ces signaux -somme parvenant de cet endroit lors de l'enregistrement cyclique, dans les cellules de mémoire vocale supplémentaires associées et
e) après lecture au choix, ces signaux-somme sont retransmis dans les créneaux temporels de transmission associés aux participants à la conférence sur la ligne (SMLa) de multiplexage côté sortie
caractérisé en ce que
les créneaux temporels de conférence formés sur les lignes (SMLe, SMLa) de multiplexage connectées à la mémoire (SM) vocale forment un nombre, égal au nombre de conférences possibles en même temps, de groupes qui comprennent chacun autant de créneaux temporels que le nombre maximal possible de participants par conférence, et l'unité (CONU) de conférence forme les dits signaux-somme propres à chaque participant à la conférence, sans transmission préalable de sommes intermédiaires à la mémoire (SM) vocale.

2. Montage suivant la revendication 1,
caractérisé en ce que
un dispositif (ATT) destiné à atténuer et à éventuellement transformer le code suivant la loi µ en un code suivant la loi A ou inversement, est connecté côté sortie à la mémoire vocale, de telle sorte que des informations lues à partir de la mémoire vocale le traverse à la fois lorsqu'elles parviennent à l'unité (CONU) de conférence et lorsqu'elles sont retransmises par la ligne (SMLa) de multiplexage, connectée à la sortie de la mémoire vocale, pour la direction de transmission sortante.

3. Montage suivant la revendication 1 ou 2,
caractérisé en ce que
la lecture au choix de signaux individuels de la mémoire (SM) vocale, qui sont fournis par des participants à la conférence et qui sont dans des créneaux temporels de conférence, est interdite pour certains participants à la conférence, qui n'y participent alors qu'en écoutant.

4. Montage suivant la revendication 1 ou 2,
caractérisé en ce que
la lecture au choix de signaux-somme de la mémoire (SM) vocale, qui sont propres à chaque participant et qui sont dans des créneaux temporels de transmission propres à chaque participant à la conférence, est interdite pour certains participants à la conférence, qui n'y participent alors qu'en parlant.

5. Montage suivant la revendication 3,
caractérisé en ce que
la limitation à la lecture s'étend à tous les participants à la conférence à l'exception d'un participant, la contribution à la conférence de ce participant parvenant en tant que conversation omnidirectionnelle à tous les autres participants à la conférence.
